# EUROPEAN PATENT APPLICATION

(11) **EP 3 173 879 A1**
(43) Date of publication of application: **31.05.2017**
(21) Application number: 15196584.5
(22) Date of filing: 26.11.2015
(51) Int. Cl.: G05B 13/04, B65G 15/00, B65G 43/00

(54) **METHOD FOR CONTROLLING A BELT CONVEYOR**

(71) Applicant: ABB Technology AG, 8050 Zürich (CH)
(72) Inventor: Gallestey Alvarez, Eduardo, 5507 Mellingen (DE); Lilienthal, Gilbert, 03052 Cottbus (DE); Richter, Ulf, 03048 Cottbus (DE)
(74) Representative: ABB Patent Attorneys

(57) **Abstract**

The purpose of the invention is to observe to control a belt conveyor by determining and storing a speed of the belt conveyor, a mass flow of the belt conveyor, and an energy consumption for driving the belt conveyor over of a period of time in the past, by creating a model to approximate an effect of the belt speed and the mass flow on the energy consumption of the belt conveyor based on the data stored in the period of time preferably by using a dynamic model identification and/or machine learning, by supplying a forecast of material constraints in the form of a material demand at a destination of the belt conveyor over a period of time in the future, by solving the model for an optimal belt speed and an optimal mass flow which minimizes the energy consumption while fulfilling the material constraints, and by controlling the belt conveyor according to the optimal belt speed and the optimal mass flow.

## Description

### TECHNICAL FIELD

The invention relates to the field of belt conveyors, and in particular to a method for controlling a belt conveyor.

### BACKGROUND OF THE INVENTION

Belt conveyors are used for the transportation of peace goods or bulk material in mining and in industry. DE 847427 discloses an endless belt which is horizontally supported by Ibis and which is driven by a drive pulley, which drive pulley is usually connected to an electrical drive train. Today's commodity markets put pressure on mines and industry to increase production, while maximizing return on of investments. In particular, reducing energy consumption by conveyor belts is a very important goal in order to increase productivity. In the recent past, there has been a trend for large conveyor systems designed to transport thousands of tons per hours of material, which conveyor systems consume tens of Megawatts of electrical power at any given time. Clearly, a system able to reduce the total energy consumed per ton of material moved is of high interest. Nowadays, belt conveyors are operated based on shift/manpower- and production planning. Conveyors run normally all day long with full speed, even when empty or nearly empty for an amount of considerable time. The energy consumption of a belt conveyor when transporting material from one point to other point is not a driver for the production planning. It is unknown to operators or the production planner what the most energy efficient way to move the material would be. In addition, the actual energy price (day-time and night-times rates) is not considered in production planning.

### BRIEF SUMMARY OF THE INVENTION

It is an objective of the invention to provide a Method for controlling a belt conveyor which reduces the energy consumption of the belt conveyor.

### BRIEF DESCRIPTION OF THE DRAWINGS

The subject matter of the invention will be explained in more detail in the following paragraph with reference to preferred exemplary embodiments which are illustrated in the attached drawings, which schematically show:
Figure 1 a belt conveyor being controlled according to the invention and the respective signal flows;
Figure 2 a time graph with different time phases for the method according to the invention;

The reference symbols used in the drawings, and their meanings, are listed in summary form in the list of designations. In principle, identical parts are provided with the same reference symbols in the figures.

### DETAILED DESCRIPTION OF THE INVENTION

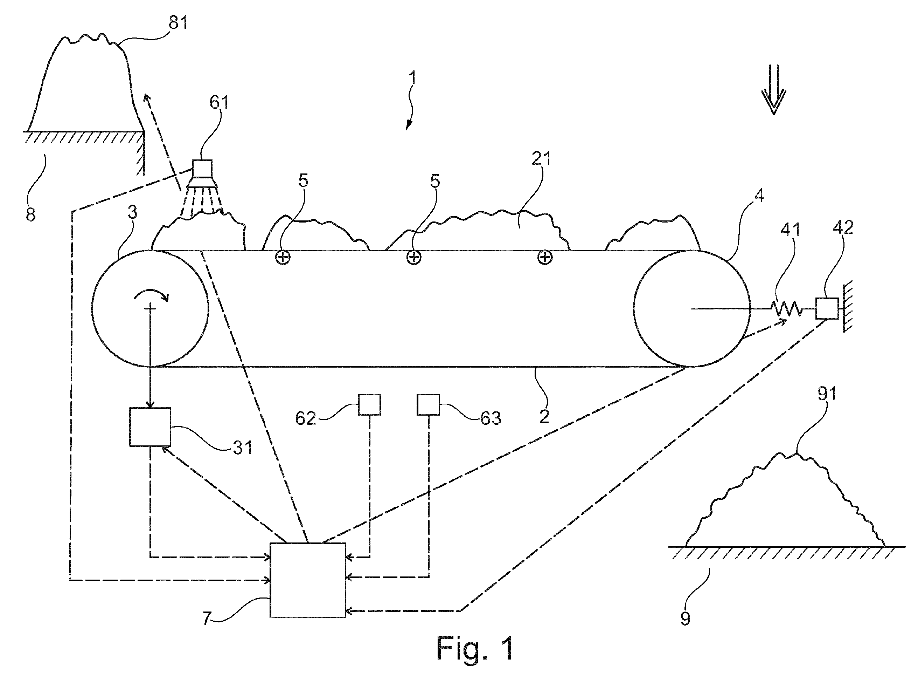

Fig. 1 schematically shows a belt conveyor 1, which belt conveyors 1 is controlled using the method according to the invention. The belt conveyor 1 comprises an endless belt 2, a drive pulley 3 and a tension pulley 4. The drive pulley 3 and the tension pulley 4 serve as the deflection pulleys and therefore form both ends of the belt conveyor 1. The rotational direction of the drive pulley is indicated with an arrow around its rotational axis. The rotational direction of the other parts of the belt conveyor 1 following accordingly.

Material 81 at the source 8 of the belt conveyor 1 is dropped onto an upper path of the belt 2 between the drive pulley 3 and the tension pulley 4, relative to the field of gravity (indicated by a double line arrow), at the end of the belt 2, which is formed by the drive pulley 3. Material 21 is transported on the upper path of the belt 2 through a translational motion of the upper path of the belt 2, coursed by the rotation of the drive pulley. At the end of the belt 2 which is formed by the tension pulley 4, the material 21 on the belt 2 is dropped onto a stack of material 91 at a destination 9 of the of the belt conveyor 1. The upper path of the belt 2 is supported by idlers 5, which idlers 5 are distributed over the length of the upper path of the belt 2.

The drive pulley 3 is driven by a torque supplied by a drive train 31, which drive train 31 is connected to the drive pulley 3. It is possible to calculate the translational speed of the upper path of the belt 2 using the information about a rotational speed of the drive pulley 3 from the drive train 31 and a diameter of the drive pulley 3. A rotational axis of the tension pulley 4 is connected to a point with a fixed position via a spring 41. The force applied by the spring 41 to the tension pulley 4 can be varied. Therefore, it is possible to vary the tension of the belt 2. The tension of the belt 2 can be measured via a tension sensor 42, which is connected to the spring 41.

A distribution of material 21 on the belt 2 perpendicular to the motion of the upper path of the belt 2 is measured via a belt scanner 61. It is possible to compute the mass flow through the belt conveyor 1 using a surface area of the material distribution measured by the belt scanner 61 and the translational speed of the upper path of the belt 2. A temperature (ambient temperature) and a humidity (ambient humidity) of air around the belt conveyor 1 is measured via a temperature sensor 62 and a humidity sensor 63.

The control unit 7 receives signals from the drive train 31, the tension sensor 42, the belt scanner 61, the temperature sensor 62, and the humidity sensor 63. The control unit 7 sents signal to the drive train 31 in the form of the targets belt speed, to the source 8 of the belt conveyor 1 in the form of a target mass flow, and to the spring 41 in the form of the target belt tension.

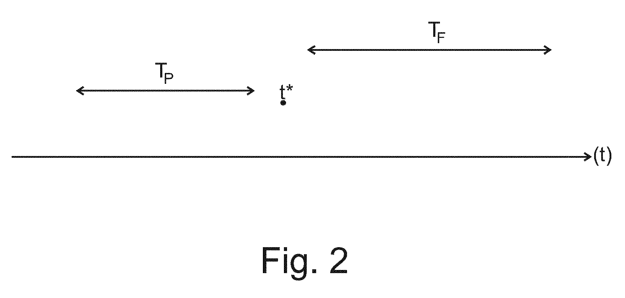

Fig. 2 schematically shows a time graph with different time phases for the method according to the invention. The point in time t* represents the time when that control method according to the invention controls the belt conveyor 1. During a period of time Tₚ prior to t*, the control unit 7 receives signals from the drive train 31, the tension sensor 42, the belt scanner 61, the temperature sensor 62, and the humidity sensor 63 and stores the respective values of the belt speed, the mass flow, an energy consumption for of the drive pulley 3, the belt tension, the ambient temperature, and the ambient humidity for every time step during the period of time Tₚ. It is possible that t* is part of Tₚ and form the end of Tₚ or that there is a period of time between the end of Tₚ and t*, like in the case shown in Fig 2.
SPEED(t)
FLOW(t)
ENERGY(t)
TENSION(t)
TEMPERATURE(t)
HUMIDITY(t)

After the period of time Tₚ, the control unit 7 uses the dynamic model identification and machine learning to identify models indicating the effect of the stored variables (except the energy consumption) on the energy consumption of the belt conveyor 1.
- MODEL1:: ENERGY(SPEED)
- MODEL2:: ENERGY(FLOW)
- MODEL3:: ENERGY(TENSION)
- MODEL4:: ENERGY(TEMPERATURE)
- MODEL5:: ENERGY(HUMIDITY)

These models can be used to formulate the relationship between the energy consumption and the other stored variables.

### MODEL: ENERGY(SPEED, FLOW, TENSION, TEMPERATURE, HUMIDITY)

Alternatively, the relationship can be directly derived from multivariable dynamic model identification and multivariable machine learning.

For a period of time T_{f}, the control unit 7 receives forecasts for a material demand at the destination 9 of the belt conveyor 1, the ambient temperature, and the ambient humidity. The period of time T_{f}, starts from t* and reaches into the future. This can be for example but not limited to be a day, several days, or a week.
DEMAND(t)
TEMPERATURE(t)
HUMIDITY(t)

At the present time t*, the control unit 7 computes an optional belt speeds, an optimal mass flow, and an optimal belt tension as a function of time over the period T_{f} that minimizes the energy consumption of the belt conveyor 1 using the model relationships between the energy consumption and the other variables, while considering the 4 the ambient temperature and the ambient humidity and while fulfilling the material demand at the destination 9 as the constraints to the optimization problem.

The control unit 7 sends the value of the optional belt speed to the drive train 31, the value of the optimal mass flow to the source 8, and the value of the optimal belt tension to the spring 4.

The control unit 7 repeats for the next time step the calculation of the optimal values over an updated period T_{f}, which starts at the next time step, by minimizing the energy consumption of the belt conveyor 1 using the model relationships between the energy consumption and the other variables, while considering the ambient temperature and the ambient humidity and while fulfilling the material demand at the destination 9 as the constraints to the optimization problem.

It is possible that the temperature sensor 62 and humidity sensor 63 are used to update the forecast for the temperature and the humidity. Furthermore, it is possible to include all past measurements into the data sets for approximating the model and repeating the creation of the model in the certain frequency. In other words, the period Tₚ would increase with every time step.

### LIST OF REFERENCE NUMERALS

- 1: belt conveyor
- 2: belt
- 21: material on the belt
- 3: drive pulley
- 31: drive train
- 4: tension pulley
- 41: spring
- 42: tension sensor
- 5: idlers
- 61: belt scanner
- 62: temperature sensor
- 63: humidity sensor
- 7: control unit
- 8: source of the belt conveyor
- 81: material at the source
- 9: destination of the belt conveyor
- 91: material at the destination
- t: time
- t*: time when control takes place (present)
- Tₚ: period of time in the past
- T_{f}: period of time in the future

## Claims

1. Method for controlling a belt conveyor, the method comprising the following steps:
a) determining and storing a speed of the belt conveyor, a mass flow of the belt conveyor, and an energy consumption for driving the belt conveyor over of a period of time in the past;
b) creating a model to approximate an effect of the belt speed and the mass flow on the energy consumption of the belt conveyor based on the data stored in the period of time preferably by using a dynamic model identification and/or machine learning;
c) supplying a forecast of material constraints in the form of a material demand at a destination of the belt conveyor over a period of time in the future;
e) solving the model for an optimal belt speed and an optimal mass flow which minimizes the energy consumption while fulfilling the material constraints; and
f) controlling the belt conveyor according to the optimal belt speed and the optimal mass flow.

2. Method according to claim 1, wherein the steps further comprise:
a) determining and storing a belt tension of the belt conveyor over of a period of time;
b) creating models to approximate an effect of the belt tension on the energy consumption of the belt conveyor based on the data stored in the period of time;
e) solving the model for an optimal belt tension which minimizes the energy consumption while fulfilling the forecast of the material constraints; and
f) controlling the belt conveyor according to the optimal belt tension.

3. Method according to one of the claims 1 to 2, wherein the steps further comprise:
a) determining and storing an ambient temperature and/or a humidity of the air around the belt conveyor over of a period of time;
b) creating a model to approximate an effect of the ambient temperature and/or the humidity on the energy consumption of the belt conveyor based on the data stored in the period of time preferably by using a parameter identification technique such as but not limited to Kalman Filters or Moving Horizon Estimation;
d) supplying a forecast of the temperature and/or the humidity over a period of time in the future.
e) solving the model for an optimal belt speed and an optimal mass flow which minimizes the energy consumption while considering forecast of the temperature and/or the humidity.

4. Method according to one of the claims 1 to 3, wherein the steps further comprise:
c) supplying a forecast of other constraints relevant for the operation of the belt conveyor such as but not limited to material available at a source of the belt conveyor, stacking and reclaimer equipment constraints, power supply constraints, an acceptable level of belt tension, or an acceptable rate of change for the belt speed;
e) solving the model for an optimal belt speed and an optimal mass flow which minimizes the energy consumption while fulfilling the material constraints and the other constraints.

5. Method according to one of the claims 1 to 4, wherein step a) is performed continuously during the controlling of the belt conveyor, wherein said online collection of data is used to add data to the data collected in the past, and wherein the data from the present and past is used to periodically update the model creation in step b).

6. Method according to one of the claims 1 to 5, wherein steps f) and g) are performed using a Model Predictive Control technique.

7. Method according to one of the claims 1 to 6, wherein a forecast of the price of energy over a period of time in the future is supplied and the solving the model minimizes the cost of energy for the belt conveyor instead of minimizing the energy consumption.
